# EUROPEAN PATENT APPLICATION

(11) **EP 3 885 386 A1**
(43) Date of publication of application: **29.09.2021**
(21) Application number: 20171174.4
(22) Date of filing: 23.04.2020
(51) Int. Cl.: C08G 18/24, C08F 214/18, C08G 18/32, C08G 18/48, C08G 18/65, C08G 18/66, C08G 18/69, C08G 18/76

(54) **POLYOL FORMULATION AND POLYURETHANE RESIN**

(30) Priority: 26.03.2020 CN 202010226690
(71) Applicant: Covestro Deutschland AG, 51373 Leverkusen (DE)
(72) Inventor: Tong, Jun, 200129 Pudong District, Shanghai (CN)
(74) Representative: Levpat

(57) **Abstract**

The present invention relates to a polyol formulation, a polyurethane resin prepared from a polyurethane reaction system containing the polyol formulation, and a method for preparing the same, wherein the polyol formulation comprises a fluorine-containing olefin.

## Description

### Technical field

The present invention relates to a polyol formulation, a polyurethane resin prepared from a polyurethane reaction system containing the polyol formulation, and a method for preparing the same, wherein the polyol formulation comprises a fluorine-containing olefin.

### Background technology

Polyurethane resin is widely used in various industries and various fields. How to prepare a polyurethane resin with better physical properties and more excellent surface treatment is a common difficult problem in the polyurethane field.

The industry has tried to use fluoropolymers to improve related performance. Fluoropolymers have a strong surface effect due to the presence of fluorine atoms, which effect is manifested in a low surface energy and a weak physical adsorption force at interfaces with other substances. Most representative and widely known are fluoropolymers made by the addition polymerization of fluorine-containing unsaturated monomers, such as polytetrafluoroethylenes or known as Teflon.

It is known in the art that the fluorination-modified polymers are widely used in the field of paints and coatings. CN109535975A discloses a high-hardness, water-resistant, fluorine-modified polyurethane waterborne wood lacquer, and its composition is as follows, based on parts by weight: 50-75 parts of high-hardness, water-resistant acrylic fluororesin-modified polyurethane resin emulsion, 2-4 parts of aluminate coupling agent, 1-2 parts of a titanate coupling agent, 0.5-2 parts of a wetting and dispersing agent, 0.1-0.5 parts of a leveling agent, 0.1-0.5 parts of a defoaming agent, 0.1-0.5 parts of a thickener, 3-10 parts of coalescing agent, 0-25 parts of color filler, and 20-50 parts of deionized water.

CN100500724C relates to a method for preparing a high solid content fluorine-containing polyurethane, wherein a polyol, a polyisocyanate, a fluorine-containing monomer, a vinyl monomer, an initiator, a catalyst and a solvent in a mass ratio of 5-20:2-8:0.5-5.5:1-6:0.015-0.10:0.001-0.06:0-2 are added to the reactor and reacted under being stirred at 20-100°C for 10-300 minutes to give a product A, a fluorine-containing polyurethane resin is formed from the product A and a curing agent B in a mass ratio of 0.5-5:0-5, and the resin is cured at 0-120°C for 4-72 hours to obtain the high solid content fluorine-containing polyurethane.

CN103059706B discloses a high-solid content light-cured fluorine-containing polyurethane-acrylate resin coating (PFUA) and a preparation method thereof. It uses acrylate monomers to carry out a double-bond solution free-radical polymerization to prepare a fluorine-containing hydroxyl polyacrylate resin (PFA). An isocyanate-terminated polyurethane-grafted fluorine-containing polyacrylate resin (PFUA) is prepared by grafting the synthetic PFA resin with polyisocyanate monomers and controlling the ratio of hydroxyl groups to isocyanate groups; and then is blocked with a hydroxylacrylic functional monomer to prepare a resin with photocuring activity. The resin has the properties of large molecular weight and low viscosity.

CN104693408B discloses an organic fluorine-modified polyurethane light-curing prepolymer, a preparation method thereof, and an ultraviolet light-cured film made therefrom.

Despite the foregoing disclosures, the industry remains an urgent need for a polyol formulation having good performances to improve the physical properties, in particular surface properties of the correlated polyurethane resin.

### Summary of invention

One aspect of the present invention is to provide a polyol formulation, comprising the following components:
B1) 30-50 pbw, preferably 27-47 pbw, based on 100 pbw of component B, of a polyether polyol and/or a polyester polyol, having a functionality of 3-6 and a weight-average molecular weight of 350-900 g/mol (measured according to ISO14900-2017);
B2) 10-20 pbw, preferably 12-18 pbw, based on 100 pbw of component B, of a polyether polyol and/or a polyester polyol, having a functionality of 2-3 and a weight-average molecular weight of 400-1000 g/mol (measured according to ISO14800-2017);
B3) 5.0-40 pbw, preferably 8.0-35 pbw, based on 100 pbw of component B, of a hydroxyl group-containing acrylate compound and/or a hydroxyl group-containing olefin; and
B4) 5.0-30.0 pbw, preferably 10-30 pbw, more preferably 10-25 pbw, based on 100 pbw of component B, of a fluorine-containing olefin.

Preferably, the hydroxyl-containing acrylate compound comprises one or more compounds having a structure of formula (I): 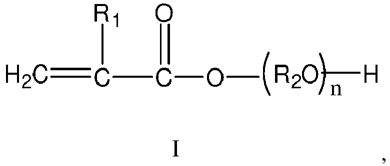 wherein, R₁ is selected from hydrogen, methyl or ethyl; R₂ is selected from an alkylene group having 2-6 carbon atoms, 2,2-bis(4-phenylene)-propane, 1,4-bis(methylene)benzene, 1,3-bis(methylene)benzene, 1,2-bis(methylene)benzene; n is an integral number selected from 1-6.

Preferably, said hydroxyl group-containing acrylate compound is selected from one, two or more of hydroxylethyl methacrylate, hydroxylpropyl methacrylate, hydroxylbutyl methacrylate, hydroxylethyl acrylate, hydroxylpropyl acrylate and hydroxylbutyl acrylate.

Preferably, said fluorine-containing olefin is selected from trifluoropropylene and/or hexafluorobutene.

Preferably, said polyol formulation further comprises B5) 0.1-2.0 pbw, based on the total weight of component B, of a polyether polyol started from ethylenediamine, having a weight-average molecular weight of 250-800 g/mol (measured according to ISO 16014-1-2003).

Preferably, the polyol formulation further comprises B6), based on 100 pbw of component B, 0.1-5.0 pbw of a small molecule polyol and/or alcohol amine chain extender; preferably, the small molecule polyol and/or alcohol amine chain extender is selected from propylene glycol, dipropylene glycol, butylene glycol, ethylene glycol, diethylene glycol, hexylene glycol, diethanolamine, triethanolamine, diisopropanolamine, triisopropanolamine, or any combination thereof.

Preferably, the polyol formulation further comprises B7) 0.05-0.5 pbw, based on 100 pbw of component B, of a silicone surfactant.

Preferably, the polyol formulation further comprises B8) 0.01-0.5 pbw, based on 100 pbw of component B, of an organometallic catalyst; preferably, the organometallic catalyst is selected from an alkyltin mercaptide, an alkyltin thioglycollate, a long chain alkyl tin carboxylate, a cobalt naphthenate or any combination thereof.

Preferably, the polyol formulation further comprises B9) 0.01-0.5 pbw, based on 100 pbw of component B, of an defoaming agent.

Surprisingly, we have found that the polyol formulation of the present invention comprising the fluorine-containing olefin, preferably trifluoropropylene (CAS: 677-21-4) and/or hexafluorobutene (CAS: 692-49-9) and others components compatible therewith can prepare a polyurethane resin having more excellent physical properties and more excellent surface treatment. In particular, it can produce a fluorinated polyurethane resin with a low surface energy through a free radical reaction with a hydroxyl-containing acrylate and/or a hydroxyl group-containing olefin and then a polyurethane reaction in which the hydroxyl group is involved. The fluorinated polyurethane resin can be used to produce the shell of an instrument or a meter that is often touched, the outdoor decorative sheet, and the composite plate, having characteristics of being stain-resistant and easy to clean. As a result, the service life of related materials is prolonged, which greatly saves manpowers, material resources and natural resources, and is more environmentally friendly.

A further aspect of the present invention is to provide a method for preparing a polyurethane resin, which is prepared from the reaction of a reaction system comprising the following components: Component A, an isocyanate mixture having a functionality of not less than 2; Component B, comprising a polyol formulation having the following components:
B1) 30-50 pbw, preferably 27-47 pbw, based on 100 pbw of component B, of a polyether polyol and/or a polyester polyol, having a functionality of 3-6 and a weight-average molecular weight of 350-900 g/mol (measured according to ISO14900-2017);
B2) 10-20 pbw, preferably 12-18 pbw, based on 100 pbw of component B, of a polyether polyol and/or a polyester polyol, having a functionality of 2-3 and a weight-average molecular weight of 400-1000 g/mol (measured according to ISO14800-2017);
B3) 5.0-40 pbw, preferably 8.0-35 pbw, based on 100 pbw of component B, of a hydroxyl group-containing acrylate compound and/or a hydroxyl group-containing olefin; and
B4) 5.0-30.0 pbw, preferably 10-30 pbw, more preferably 10-25 pbw, based on 100 pbw of component B, of a fluorine-containing olefin; and

### Component C, a free-radical initiator.

Preferably, the hydroxyl-containing acrylate compound comprises one or more compounds having a structure of formula (I):

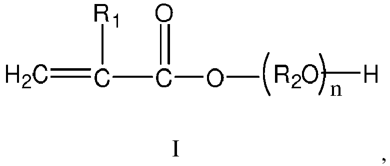

Wherein, R₁ is selected from hydrogen, methyl or ethyl; R₂ is selected from an alkylene group having 2-6 carbon atoms, 2,2-bis(4-phenylene)-propane, 1,4-bis(methylene)benzene, 1,3-bis(methylene)benzene, 1,2-bis(methylene)benzene; n is an integral number selected from 1-6.

Preferably, said hydroxyl group-containing acrylate compound is selected from one, two or more of hydroxylethyl methacrylate, hydroxylpropyl methacrylate, hydroxylbutyl methacrylate, hydroxylethyl acrylate, hydroxylpropyl acrylate and hydroxylbutyl acrylate.

Preferably, said fluorine-containing olefin is selected from trifluoropropylene and/or hexafluorobutene.

Preferably, said polyol formulation further comprises B5) 0.1-2.0 pbw, based on the total weight of component B, of a polyether polyol started from ethylenediamine, having a weight-average molecular weight of 250-800 g/mol (measured according to ISO 16014-1-2003).

Preferably, the polyol formulation further comprises B6), based on 100 pbw of component B, 0.1-5.0 pbw of a small molecule polyol and/or alcohol amine chain extender; preferably, the small molecule polyol and/or alcohol amine chain extender is selected from propylene glycol, dipropylene glycol, butylene glycol, ethylene glycol, diethylene glycol, hexylene glycol, diethanolamine, triethanolamine, diisopropanolamine, triisopropanolamine, or any combination thereof.

Preferably, the polyol formulation further comprises B7) 0.05-0.5 pbw, based on 100 pbw of component B, of a silicone surfactant.

Preferably, the polyol formulation further comprises B8) 0.01-0.5 pbw, based on 100 pbw of component B, of an organometallic catalyst; preferably, the organometallic catalyst is selected from an alkyltin mercaptide, an alkyltin thioglycollate, a long chain alkyl tin carboxylate, a cobalt naphthenate or any combination thereof.

Preferably, the polyol formulation further comprises B9) 0.01-0.5 pbw, based on 100 pbw of component B, of an defoaming agent.

Preferably, said component C free-radical initiator is selected from peroxides and/or azo compounds.

Preferably, the peroxide is selected from ketone peroxide, carbonate peroxide, acyl peroxide, ester peroxide, hydrogen peroxide, alkyl peroxide, or any combination thereof, preferably t-butyl benzoate peroxide, benzoyl peroxide, or a combination thereof.

Preferably, said azo compound is selected from azodiisobutyronitrile, azodiisoheptylonitrile or any combination thereof.

Preferably, the content of said component C free-radical initiator is 0.10-7.250 pbw, preferably 0.20-5.15 pbw, more preferably 0.40-3.10 pbw, based on 100 pbw of component A.

Preferably, said component C free-radical initiator is preferably added to component A (as a part of component A) before being mixed with component B.

Preferably, said component A) and/or component B) further include a reinforcing material, a filler, a water-removing agent or any combination thereof.

Preferably, the method further includes the following steps:
Adding component C to component A at normal temperature, pre-stirring, then mixing with component B by stirring, injecting the mixture into a mold, and heating and curing the mixture to obtain said polyurethane resin;
wherein said components A, B and C are in a mass ratio of 35-80:100:0.20-5.15, preferably 40-80:100:0.4-3.10.

The method for preparing a polyurethane resin according to the present invention can produce a polyurethane resin with a low surface energy. The polyurethane resin can be used to produce the shell of an instrument or a meter, the outdoor decorative sheet, and the composite plate, having characteristics of being stain-resistant and easy to clean. The method of the present invention prolongs the service life of related materials, greatly saves manpowers, material resources and natural resources, and is more environmentally friendly.

A further aspect of the present invention is to provide a polyurethane resin, which is prepared with the method for preparing a polyurethane resin according to the present invention.

Preferably, the surface energy of the polyurethane resin is less than 0.075 N/m, preferably less than 0.07 N/m (measured according to ASTM D2578-99A).

Preferably, the polyurethane resin has a density of 1000-1170 kg/m³, preferably 1030-1170 kg/m³.

Preferably, the surface hardness of the polyurethane resin is > 70 Shore D, preferably > 74 Shore D.

Preferably, the polyurethane resin has a weight loss rate at the initial stage of being demolded of < 1% (test method: analytical balance weighing method).

Preferably, said polyurethane resin has a weight loss rate of <0.2% after being treated at a temperature of 100°C under a vacuum of -0.075Mpa for 1 hour (test method: analytical balance weighing method).

Surprisingly, we have found that the polyurethane resin of the present invention has low surface energy, and the polyurethane product made therefrom has the advantages of stain resistance and easy cleaning. It can be widely used in the shell of an instrument or a meter that is often touched, the outdoor decorative sheet, the composite plate, and the like.

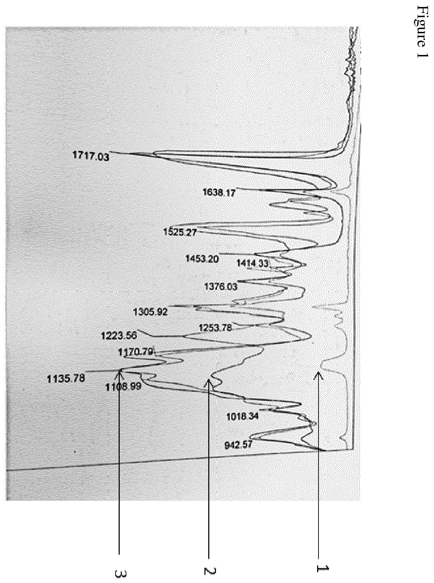

It can be seen from figure 1 of the present invention that the double bond of the fluorine-containing olefin has disappeared and is incorporated in the polyurethane resin.

A further aspect of the present invention is to provide a polyurethane composite comprising the polyurethane resin of the present invention.

A further aspect of the present invention is to provide a polyurethane product comprising the polyurethane resin according to the present invention.

Preferably, said polyurethane product is selected from polyurethane composite, instrument shell, outdoor decorative material, automotive exterior trim and turbine fan blade, preferably instrument shell, outdoor decorative material and automotive exterior trim.

### Brief description of the drawings

Figure 1 is an infrared spectrum of a polyurethane resin according to the present invention, in which absorption peaks indicated by three arrows from top to bottom are represented by 1, 2, and 3, respectively:
1 represents the characteristic wave number of the C-F bond in the fluorine-containing olefin monomer;
2 indicates the characteristic wave number of the C-F bond at the initial stage of mixing components A/B;
3 indicates the characteristic wave number of the C-F bond in the cured resin.

### Detailed description of the invention

### I. polyol formulation

The present invention provides a polyol formulation, comprising the following components:
B1) 30-50 pbw, preferably 27-47 pbw, based on 100 pbw of component B, of a polyether polyol and/or a polyester polyol, having a functionality of 3-6 and a weight-average molecular weight of 350-900 g/mol (measured according to ISO14900-2017);
B2) 10-20 pbw, preferably 12-18 pbw, based on 100 pbw of component B, of a polyether polyol and/or a polyester polyol, having a functionality of 2-3 and a weight-average molecular weight of 400-1000 g/mol (measured according to ISO14800-2017);
B3) 5.0-40 pbw, preferably 8.0-35 pbw, based on 100 pbw of component B, of a hydroxyl group-containing acrylate compound and/or a hydroxyl group-containing olefin; and
B4) 5.0-30.0 pbw, preferably 10-30 pbw, more preferably 10-25 pbw, based on 100 pbw of component B, of a fluorine-containing olefin.

Preferably, the hydroxyl-containing acrylate compound comprises one or more compounds having a structure of formula (I): 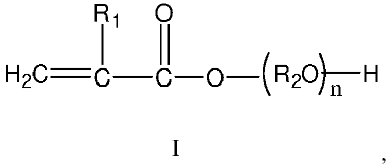 wherein, R₁ is selected from hydrogen, methyl or ethyl; R₂ is selected from an alkylene group having 2-6 carbon atoms, 2,2-bis(4-phenylene)-propane, 1,4-bis(methylene)benzene, 1,3-bis(methylene)benzene, 1,2-bis(methylene)benzene; n is an integral number selected from 1-6.

Optionally, said hydroxyl group-containing acrylate compound is selected from one, two or more of hydroxylethyl methacrylate, hydroxylpropyl methacrylate, hydroxylbutyl methacrylate, hydroxylethyl acrylate, hydroxylpropyl acrylate and hydroxylbutyl acrylate.

Preferably, said fluorine-containing olefin is selected from trifluoropropylene and/or hexafluorobutene.

Preferably, said polyol formulation further comprises B5) 0.1-2.0 pbw, based on the total weight of component B, of a polyether polyol started from ethylenediamine, having a weight-average molecular weight of 250-800 g/mol (measured according to ISO 16014-1-2003).

Optionally, the polyol formulation further comprises B6), based on 100 pbw of component B, 0.1-5.0 pbw of a small molecule polyol and/or alcohol amine chain extender; preferably, the small molecule polyol and/or alcohol amine chain extender is selected from propylene glycol, dipropylene glycol, butylene glycol, ethylene glycol, diethylene glycol, hexylene glycol, diethanolamine, triethanolamine, diisopropanolamine, triisopropanolamine, or any combination thereof.

Preferably, the polyol formulation further comprises B7) 0.05-0.5 pbw, based on 100 pbw of component B, of a silicone surfactant.

Preferably, the polyol formulation further comprises B8) 0.01-0.5 pbw, based on 100 pbw of component B, of an organometallic catalyst; preferably, the organometallic catalyst is selected from an alkyltin mercaptide, an alkyltin thioglycollate, a long chain alkyl tin carboxylate, a cobalt naphthenate or any combination thereof.

Preferably, the polyol formulation further comprises B9) 0.01-0.5 pbw, based on 100 pbw of component B, of an defoaming agent.

Surprisingly, we have found through repeated experiments that the polyol formulation of the present invention comprising the fluorine-containing olefin, preferably trifluoropropylene (CAS: 677-21-4) and/or hexafluorobutene (CAS: 692-49-9) and others components compatible therewith can prepare a polyurethane resin having more excellent physical properties and more excellent surface treatment. In particular, it can produce a fluorinated polyurethane resin with a low surface energy through a free radical reaction with a hydroxyl-containing acrylate and/or a hydroxyl group-containing olefin and then a polyurethane reaction in which the hydroxyl group is involved. The fluorinated polyurethane resin can be used to produce the shell of an instrument or a meter that is often touched, the outdoor decorative sheet, and the composite plate, having characteristics of being stain-resistant and easy to clean. As a result, the service life of related materials is prolonged, which greatly saves manpowers, material resources and natural resources, and is more environmentally friendly.

### II. Method for preparing a polyurethane resin

The present invention provides a method for preparing a polyurethane resin, which is prepared from the reaction of a reaction system comprising the following components:
Component A, an isocyanate mixture having a functionality of not less than 2;
Component B, said polyol formulation of the present invention; and
Component C, a free-radical initiator.

Preferably, said component C free-radical initiator is selected from peroxides and/or azo compounds.

Preferably, the peroxide is selected from ketone peroxide, carbonate peroxide, acyl peroxide, ester peroxide, hydrogen peroxide, alkyl peroxide, or any combination thereof, preferably t-butyl benzoate peroxide, benzoyl peroxide, or a combination thereof.

Optionally, said azo compound is selected from azodiisobutyronitrile, azodiisoheptylonitrile or any combination thereof.

Optionally, the content of said component C free-radical initiator is 0.10-7.250 pbw, preferably 0.20-5.15 pbw, more preferably 0.40-3.10 pbw, based on 100 pbw of component A.

Preferably, said component C free-radical initiator is preferably added to component A (as a part of component A) before being mixed with component B.

Preferably, said component A) and/or component B) further comprise a reinforcing material, a filler, a water-removing agent or any combination thereof.

Optionally, the method further includes the following steps:
Adding component C to component A at normal temperature, pre-stirring, then mixing with component B by stirring, injecting the mixture into a mold, and heating and curing the mixture to obtain said polyurethane resin;
wherein said components A, B and C are in a mass ratio of 35-80:100:0.20-5.15, preferably 40-80:100:0.4-3.10.

Preferably, the polyurethane resin is obtained by reacting the polyol composition, the isocyanate mixture and the free-radical initiator simultaneously, i.e., prepared under the reaction condition that the free radical polymerization reaction and the addition polymerization reaction of the isocyanate group with the hydroxyl group co-exist. The method of the present invention simply and effectively produces a polyurethane resin having a high performance and good surface properties in one step process.

In embodiments of the present invention, the organic polyisocyanate may be any aliphatic, cycloaliphatic, or aromatic isocyanate known to be used in the preparation of polyurethanes. Its example includes, but is not limited to: toluene diisocyanate (TDI), diphenylmethane diisocyanate (MDI), polyphenylmethane polyisocyanate (pMDI), 1,5-naphthalene diisocyanate (NDI), hexamethylene diisocyanate (HDI), methylcyclohexyl diisocyanate (TDI), 4,4'-dicyclohexylmethane diisocyanate, isophorone diisocyanate (IPDI), p-phenylene diisocyanate (PPDI), p-xylylene diisocyanate (XDI), tetramethyldimethylene diisocyanate (TMXDI) and their polymers or a combination thereof. The functionality of the isocyanate that can be used in the present invention is preferably 2.0-3.5, particularly preferably 2.1-2.9. The isocyanate has preferably a viscosity of 5-700 mPa·s, particularly preferably 10-300 mPa·s, measured at 25°C according to DIN 53019-1-3.

When used in the present invention, the organic polyisocyanate comprises an isocyanate dimer, an isocyanate trimer, an isocyanate tetramer, an isocyanate pentamer, or a combination thereof.

In a preferred example of the present invention, the isocyanate component a) is selected from diphenylmethane diisocyanate (MDI), polyphenylmethane polyisocyanate (pMDI), and their polymers, prepolymers or a combination thereof.

The terminated-isocyanate may be also used as isocyanate component A), which may be prepared from the reaction of an excessive amount of an organic polyisocyanate or an organic polyisocyanate mixture with a polyol compound. Those of ordinary skill in the art are familiar with these compounds and their preparation methods.

The polyol formulation of the present invention can comprise an organic polyol that is conventionally used in the art to prepare the polyurethane, including but not limited to a polyether polyol, a polyether carbonate polyol, a polyester polyol, a polycarbonate diol, a polymer polyol, a vegetable oil-based polyol.

The polyether polyol can be prepared by a known process, for example, by reacting an olefin oxide with a starter in the presence of a catalyst. The catalyst is preferably, but not limited to, basic hydroxide, basic alkoxide, antimony pentachloride, boron fluoride etherate, or a mixture thereof. The olefin oxide is preferably, but not limited to, tetrahydrofuran, ethylene oxide, propylene oxide, 1,2-butylene oxide, 2,3-butylene oxide, styrene oxide, or a mixture thereof, particularly preferably ethylene oxide and/or propylene oxide. The starter is preferably, but not limited to, a polyhydroxyl compound or a polyamine compound. The polyhydroxyl compound is preferably, but not limited to, water, ethylene glycol, 1,2-propylene glycol, 1,3-propylene glycol, diethylene glycol, trimethylolpropane, glycerol, bisphenol A, bisphenol S or a mixture thereof. The polyamine compound is preferably, but not limited to, ethylene diamine, propylene diamine, butylene diamine, hexylene diamine, diethylene triamine, toluene diamine or a mixture thereof.

The polyether carbonate polyol may also be used in the present invention. The polyether carbonate polyol can be prepared by the addition reaction of carbon dioxide and alkylene oxide with a double metal cyanide catalyst in the presence of an active hydrogen-containing starter.

The polyester polyol is prepared by reacting a dicarboxylic acid or a dicarboxylic anhydride with a polyol. The dicarboxylic acid is preferably, but not limited to, an aliphatic carboxylic acid containing 2-12 carbon atoms. The aliphatic carboxylic acid containing 2-12 carbon atoms is preferably, but not limited to, succinic acid, malonic acid, glutaric acid, adipic acid, suberic acid, azelaic acid, sebacic acid, dodecyl carboxylic acid, maleic acid, fumaric acid, phthalic acid, isophthalic acid, terephthalic acid, or a mixture thereof. The dicarboxylic anhydride is preferably, but not limited to, phthalic anhydride, tetrachlorophthalic anhydride, maleic anhydride, or a mixture thereof. The polyol to be reacted with a dicarboxylic acid or a dicarboxylic anhydride is preferably, but not limited to, ethylene glycol, diethylene glycol, 1,2-propylene glycol, 1,3-propylene glycol, dipropylene glycol, 1,3-methylpropylene glycol, 1,4-butylene glycol, 1,5-pentylene glycol, 1,6-hexylene glycol, neopentyl glycol, 1,10-decanediol, glycerol, trimethylolpropane, or a mixture thereof. The polyester polyol further includes a polyester polyol prepared from a lactone. The polyester polyol prepared from a lactone is preferably, but not limited to, ε-caprolactone. Preferably, the polyester polyol has a molecular weight of 200-3000 and a functionality of 2-6, preferably 2-4, and more preferably 2-3.

The polycarbonate diol can be prepared by reacting a diol with a dihydrocarbyl carbonate or a diaryl carbonate or phosgene. The diol is preferably, but not limited to, 1,2-propylene glycol, 1,3-propylene glycol, 1,4-butylene glycol, 1,5-pentylene glycol, 1,6-hexylene glycol, diethylene glycol, trioxymethylene diol, or a mixture thereof. The dihydrocarbyl carbonate or diaryl carbonate is preferably, but not limited to, diphenyl carbonate.

When used in the invention, the vegetable oil-based polyol comprises a vegetable oil, a vegetable oil polyol or a modified product thereof. The vegetable oil is a compound prepared from an unsaturated fatty acid and glycerol, or is an oil and fat extracted from fruits, seeds and germs of plants, and is preferably, but not limited to, peanut oil, soyabean oil, linseed oil, castor oil, rapeseed oil, and palm oil. The vegetable oil polyol is a polyol started from one or more vegetable oils. The starter for synthesizing the vegetable oil polyol includes, but is not limited to, soybean oil, palm oil, peanut oil, low erucic acid rapeseed oil, and castor oil. A hydroxyl group can be introduced into the starter of the vegetable oil polyol through the process such as cracking, oxidation, or transesterification, and then the corresponding vegetable oil polyol can be prepared by a process for preparing an organic polyol well known to those skilled in the art.

Those skilled in the art are familiar with methods for measuring the hydroxyl value, such as those disclosed in Houben Weyl, Methoden der Organischen Chemie, vol. XIV/2 Makromolekulare Stoffe, p.17, Georg Thieme Verlag; Stuttgart 1963. The entire contents of this document are incorporated herein by reference.

When used in the present invention, unless otherwise specified, the functionality and hydroxyl value of the organic polyol refer to the average functionality and the average hydroxyl value.

The hydroxyl-containing acrylate compound of the present invention comprises one or more compounds having a structure of formula (I): 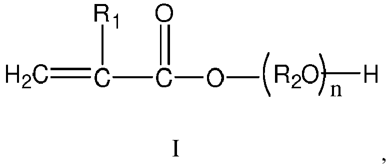 wherein, R₁ is selected from hydrogen, methyl or ethyl; R₂ is selected from an alkylene group having 2-6 carbon atoms; n is an integral number selected from 1-6.

In a preferred embodiment of the present invention, R₂ is selected from ethylene, propylene, butylene, pentylene, 1-methyl-1,2-ethylene, 2-methyl-1,2-ethylene, 1-ethyl-1,2-ethylene, 2-ethyl-1,2-ethylene, 1-methyl-1,3-propylene, 2-methyl-1,3-propylene, 3-methyl-1,3-propylene, 1-ethyl-1,3-propylene, 2-ethyl-1,3-propylene, 3-ethyl-1,3-propylene, 1-methyl-1,4-butylene, 2-methyl-1,4-butylene, 3-methyl-1,4-butylene and 4-methyl-1,4-butylene, 2,2-bis(4-phenylene)-propane, 1,4-dimethylenebenzene, 1,3-dimethylenebenzene, 1,2-dimethylenebenzene.

In a preferred embodiment of the present invention, said hydroxyl group-containing acrylate compound is selected from hydroxylethyl methacrylate, hydroxylpropyl methacrylate, hydroxylbutyl methacrylate, hydroxylethyl acrylate, hydroxylpropyl acrylate, hydroxylbutyl acrylate or a combination thereof.

The hydroxyl group-containing acrylate compound may be prepared by conventional methods in the art, for example, may be prepared by the esterification reaction of (meth)acrylic anhydride or (meth)acrylic acid, (meth)acryloyl halide compound and HO-(R₂O)ₙH. Those skilled in the art are familiar with these preparation methods, e.g., which is described in "Manual of Polyurethane Raw Materials and Additives" (Liu Yijun, published on 1st April 2005), Chapter III, and in "Polyurethane Elastomer" (Liu Houjun, published in August 2012), Chapter II. The entire contents of these documents are incorporated herein by reference.

The hydroxyl group-containing olefin of the present invention includes a hydroxyl-terminated polybutadiene. The hydroxyl-terminated polybutadiene generally refers to a homopolymer or copolymer of butadiene having on the average two or more hydroxyl groups at both ends of each macromolecule, and may be selected from 1,4-dihydroxyl polybutadiene, 1,3-dihydroxyl polybutadiene, or combinations thereof. Hydroxyl-terminated polybutadiene.

The method known in the art for synthesizing the hydroxyl-terminated polybutadiene mainly comprises the free radical polymerization, the anionic living polymerization, and the anionic coordination polymerization. Generally, for the free radical polymerization, the product in 1,4-structure comprises 75-80%, wherein the reaction for producing the product of 1,4-dihydroxyl polybutadiene comprises about 60%, and the product in 1,2-ethylene group structure comprises about 20-25%. For the anionic coordination polymerization, almost all molecules in the product are 1,4-dihydroxyl polybutadiene with a higher proportion of the cis-structure. For the anionic living polymerization, sometimes the 1,2-ethylene group structure in the molecule can reach up to 90%, and the resulting prepolymer also has a narrow molecular weight distribution, and Mw/Mn is closer to 1.

The polyol formulation of the present invention further comprises a fluorine-containing olefin. The fluorine-containing olefin includes, but is not limited to, tetrafluoroethylene, vinylidene fluoride, trifluoropropylene, hexafluorobutene, trifluorochloroethylene and the like. Preferably, said fluorine-containing olefin is selected from trifluoropropylene and/or hexafluorobutene. The fluorine-containing olefin of the present invention can be prepared by a known and effective method for preparing a fluorine-containing olefin.

The free radical initiator used in the present invention includes, but is not limited to, peroxide, persulfide, percarbonate, boric acid peroxide, azo compound, or other suitable free radical initiators that can initiate the curing of a double bond-containing compound. An example thereof includes tert-butyl peroxyisopropylcarbonate, tert-butyl peroxy-3,5,5-trimethylhexanoate, methylethyl ketone peroxide, and cumene hydroperoxide. Preferably, the peroxide is selected from ketone peroxide, carbonate peroxide, acyl peroxide, ester peroxide, hydrogen peroxide, alkyl peroxide, or any combination thereof, preferably t-butyl benzoate peroxide, benzoyl peroxide, or a combination thereof; said azo compound is selected from azodiisobutyronitrile, azodiisoheptylonitrile or any combination thereof.

The free radical initiator may be added to the polyol formulation/component or component A the isocyanate mixture/component, or can be added to both components, preferably added to component A the isocyanate mixture/component.

The content of the radical reaction initiator is generally 0.10-7.250 pbw, preferably 0.20-5.15 pbw, more preferably 0.40-3.10 pbw, based on 100 pbw of component A.

In an embodiment of the present invention, the reaction system used in the method for preparing the polyurethane resin may also contain a catalyst for catalyzing the reaction between an isocyanate group (NCO) and a hydroxyl group (OH). A suitable catalyst for the polyurethane reaction is preferably an organometallic catalyst. Preferably, the organometallic catalyst is selected from an alkyltin mercaptide, an alkyltin thioglycollate, a long chain alkyl tin carboxylate, a cobalt naphthenate or any combination thereof. The content of the organometallic catalyst is 0.01-0.5 pbw, preferably 0.01-0.45 pbw, based on 100 pbw of component B.

In an embodiment of the present invention, in the polyurethane reaction, i.e., the addition polymerization reaction between the isocyanate group and the hydroxyl group, the isocyanate group may be an isocyanate group contained in the organic polyisocyanate mixture (component A), and can also be an isocyanate group contained in the organic polyisocyanate (component A) and the polyol formulation, and the hydroxyl group can be a hydroxyl group contained in the polyol, and can also be a hydroxyl group contained in an intermediate product of the reaction of the isocyanate mixture with the polyol.

In an embodiment of the present invention, the polyurethane addition polymerization reaction (i.e., the addition polymerization reaction between the isocyanate group and the hydroxyl groups) and the free radical polymerization reaction coexist. It is well known to those skilled in the art that suitable reaction conditions can be selected so that the polyurethane addition polymerization reaction and the free radical polymerization reaction are performed successively, however, the polyurethane matrix thus prepared has a different structure than the polyurethane resin matrix prepared where the polyurethane addition polymerization reaction and the free radical polymerization reaction are performed simultaneously; and thereby the prepared polyurethane composites have different mechanical properties and manufacturabilities.

In an embodiment of the present invention, the above-mentioned reaction system/polyurethane composition for preparing the polyurethane resin may further comprise an auxiliary agent or an additive agent, including but not limited to: filler, internal release agent, flame retardant, smoke suppressant, dye, pigment, antistatic agent, antioxidant, UV stabilizer, diluent, defoaming agent, coupling agent, surface wetting agent, leveling agent, water-removing agent, catalyst, molecular sieve, thixotropic agent, plasticizer, foaming agent, foam stabilizing agent, foam stabilizer, free radical reaction suppressant or a combination thereof; and these components can be optionally contained in the isocyanate component A and/or the polyol component B. These components may be separately stored as another component, and can be used in the preparation of the polyurethane composite after being mixed with the isocyanate component A and/or the polyol component B.

### III. Polyurethane composite

The polyurethane composite provided by the present invention comprises the polyurethane resin prepared from the polyol formulation of the present invention. It may also comprise a reinforcing material and the like. The reinforcing material of the present invention is selected from fiber-reinforced material, carbon nanotube, hard particles, or a combination thereof, and more preferably selected from fiber-reinforced material.

The present invention will be further described below with reference to specific examples. However, it should be understood that these examples are only intended to illustrate the invention but do not limit the scope of the invention.

### Examples

The test methods for which no specific conditions are indicated in the following examples are generally based on conventional conditions or according to conditions recommended by the manufacturer. Unless otherwise stated, all percentages and parts are by weight.

### Description of test methods:

Functionality refers to the value calculated according to the industry formula: functionality = hydroxyl value ^{∗} molecular weight/56100; where the molecular weight is measured by GPC high performance liquid chromatography;
Density refers to the mass of polyurethane resin per unit volume, and is measured according to ASTM D792-2007;
Surface energy refers to the non-volume work that must be done on a substance to increase the surface area of a system reversibly under constant temperature, constant pressure, and constant composition; or the extra energy of surface particles relative to internal particles; and measured according to ASTM D2578-99A;
Weight loss rate after being demolded refers to the weight loss rate after being demolded, measured with the analytical balance weighing method;
Thermal vacuum weight loss rate refers to the weight loss rate measured with an analytical balance after being treated under the condition of 100°C, -0.075MPa for 1 hour.

The raw materials used in the examples are as follows:
Raw material 1 Desmophen4030, polyether polyol having a functionality of 5.8 and a hydroxyl value of 380 mgKOH/g, Covestro Polymers Co., Ltd.;
Raw material 2 Desmophen4050E, polyether polyol having a functionality of 4.0 and a hydroxyl value of 630 mgKOH/g, Covestro Polymers Co., Ltd.;
Raw material 3 S-440, polyether polyol having a functionality of 4.5 and a hydroxyl value of 450 mgKOH/g, Covestro Polymers Co., Ltd.;
Raw material 4 Arcol-1048, polyether polyol having a functionality of 3.0 and a hydroxyl value of 350 mgKOH/g, Covestro Polymers Co., Ltd.;
Raw material 5 Arcol-1071, polyether polyol having a functionality of 3.0 and a hydroxyl value of 240mg KOH/g, Covestro Polymers Co., Ltd.;
Raw material 6 Arcol-1003, polyether polyol having a functionality of 2.0 and a hydroxyl value of 280 mgKOH/g, Covestro Polymers Co., Ltd.;
Raw material 7 Glycerol, P&G Chemical Co. Ltd.;
Raw material 8 Triethanolamine, industrial grade, BASF company;
Raw material 9 E-100 (diethyltoluenediamine), Albemarle chemical company;
Raw material 10 3,3,3-trifluorochloropropene (3,3,3 trifluoro propene), Sigma-Aldrich Chemicals;
Raw material 11 1,1,1,4,4,4-hexafluoro-2-butene (1,1,1,4,4,4-hexafluorobutene), Sigma-Aldrich Chemicals;
Raw material 12 1,4-dihydroxylpolydibutene (Hydroxyl terminated Polydibutene) having a molecular weight of 1000, OHV=112mgKOH/g, Sigma-Aldrich Chemicals;
Raw material 13 methyl hydroxylethylacrylate, Sigma-Aldrich Chemicals;
Raw material 14 methyl hydroxylpropylacrylate, Sigma-Aldrich Chemicals;
Raw material 15 silicone surfactant B-8462, Evonik Chemicals;
Raw material 16 defoamer BYK-1799, BYK Chemicals;
Raw material 17 polyurethane catalyst PU1748, Rhein Chemie;
Raw material 18 dibutyltin dilaurate T-12, Air Products and Chemicals, Inc.;
Raw material 19 cobalt naphthenate, Sigma-Aldrich Chemicals;
Raw material 20 polymethylene polyphenylene polyisocyanate PAPI, Desmodur44V20 Covestro Polymers Co., Ltd.;
Raw material 21 cumene peroxide BPO, Sigma-Aldrich Chemicals.

**Table 1-Raw materials and ratios in the reaction system**

| Components | Comparative Example 1 | Example 1 | Example 2 | Example 3 |
|---|---|---|---|---|
| Raw material 1 | 15 | 12 | 8 | 15 |
| Raw material 2 | 0 | 0 | 0.5 | 1.0 |
| Raw material 3 | 30 | 10 | 7 | 10 |
| Raw material 4 | 30 | 20 | 17 | 18 |
| Raw material 5 | 16 | 8 | 14 | 8 |
| Raw material 6 | 8 | 8.4 | 9.6 | 4.2 |
| Raw material 7 | 0.35 | 0.5 | 0 | 0 |
| Raw material 8 | 0 | 0 | 0 | 0.75 |
| Raw material 9 | 0 | 0.25 | 0 | 0 |
| Raw material 10 | 20 | 0 | 20 | |
| Raw material 11 | 0 | 0 | 20 | 0 |
| Raw material 12 | 0 | 0 | 0 | 5 |
| Raw material 13 | 0 | 20 | 0 | 5 |
| Raw material 14 | 0 | 0 | 23 | 12 |
| Raw material 15 | 0.15 | 0.25 | 0.25 | 0.35 |
| Raw material 16 | 0.1 | 0.2 | 0.2 | 0.3 |
| Raw material 17 | 0.1 | 0.15 | 0.10 | 0.1 |
| Raw material 18 | 0 | 0 | 0 | 0.001 |
| Raw material 19 | 0.3 | 0.25 | 0.35 | 0.30 |
| | All raw materials of component B were separately metered and added in a clean container, and mixed by stirring with a centrifugal mixer Speedmixer at 2000 rpm for 40 seconds | | | |
| Raw material 20 component A | 75 | 75.0 | 75 | 75 |
| Raw material 21 component C | 0.45 | 0.23 | 0.56 | 0.94 |
| | Component A and C were separately metered and added in a clean container, then component B was added, and mixed with a centrifugal mixer Speedmixer at 2000 rpm for 60 seconds | | | |

### Preparation of polyurethane resin

After components A, B and C of each example and comparative example were metered according to the mass ratio and requirements as shown in Table 1 and mixed uniformly, they were manually or mechanically mixed at an appropriate raw material temperature (about 25°C) and injected into a mold of tempered glasses having a gap of 5mm. After closing the mold, the mold was placed upright in a program-controllable oven and heated and cured according to the following procedure:
1) heated at 30°C for 2.0 hours;
2) warmed up to 50°C within 10 minutes and heated for 1 hour;
3) warmed up to 70°C within 10 minutes and heated for 2 hours;
4) warmed up to 100°C within 10 minutes and heated for 2 hours;
5) cooled to 25°C within 1 hour, and then the resin sample was removed from the flat glass mold.

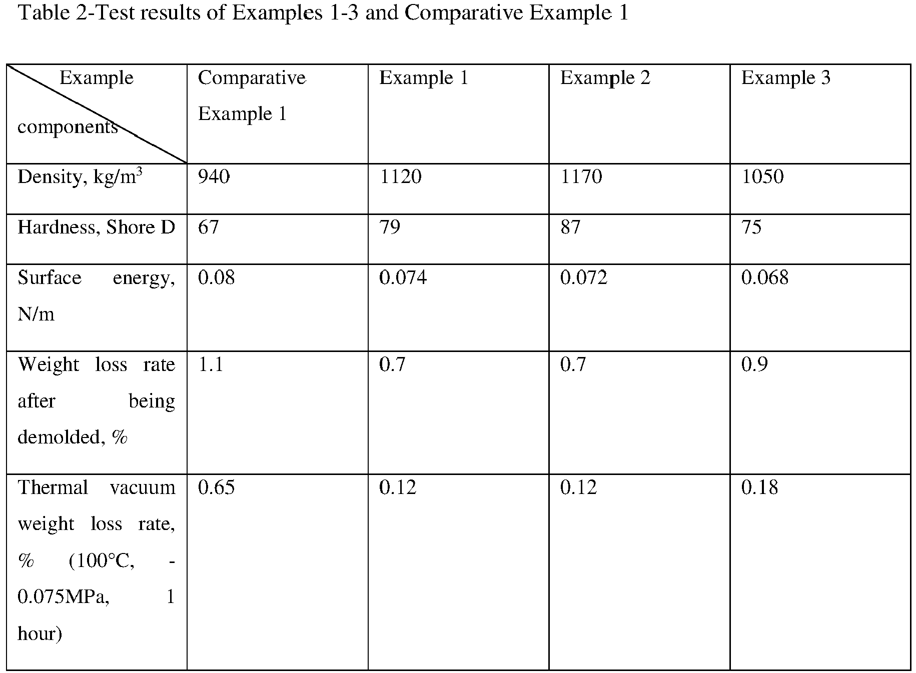

According to the above test results, the polyurethane resin of the present invention had the following characteristics:
1. Density: 1000-1170 kg/m³;
2. The surface hardness was Shore D: 75-87;
3. The product had a total weight loss rate at the initial stage of being demolded of <1% (indicating that the low-boiling fluorine-containing compounds rarely escaped during the reaction and curing process);
4. The post-treatment in vacuum oven: after at 100°C and -0.075MPa for 1 hour, the weight loss rate <0.2% (indicating that the 20-30°C low-boiling fluorine-containing compound formed a stable chemical structure after the chemical reaction in the resin).

It can be known from the above experimental results that the polyurethane resin of the present invention has a lower weight loss rate, a higher scratch hardness, and a lower surface energy, and the obtained polyurethane product is easy to clean.

## Claims

1. A polyol formulation, comprising the following components:
B1) 30-50 pbw, preferably 27-47 pbw, based on 100 pbw of component B, of a polyether polyol and/or a polyester polyol, having a functionality of 3-6 and a weight-average molecular weight of 350-900 g/mol (measured according to ISO14900-2017);
B2) 10-20 pbw, preferably 12-18 pbw, based on 100 pbw of component B, of a polyether polyol and/or a polyester polyol, having a functionality of 2-3 and a weight-average molecular weight of 400-1000 g/mol (measured according to ISO14800-2017);
B3) 5.0-40 pbw, preferably 8.0-35 pbw, based on 100 pbw of component B, of a hydroxyl group-containing acrylate compound and/or a hydroxyl group-containing olefin; and
B4) 5.0-30.0 pbw, preferably 10-30 pbw, more preferably 10-25 pbw, based on 100 pbw of component B, of a fluorine-containing olefin.

2. The polyol formulation as claimed in claim 1, **characterized in that** said hydroxyl group-containing acrylate compound is selected from one, two or more of hydroxylethyl methacrylate, hydroxylpropyl methacrylate, hydroxylbutyl methacrylate, hydroxylethyl acrylate, hydroxylpropyl acrylate and hydroxylbutyl acrylate.

3. The polyol formulation as claimed in claim 1, **characterized in that** said fluorine-containing olefin is selected from trifluoropropylene and/or hexafluorobutene.

4. The polyol formulation as claimed in any of claims 1-3, **characterized in that** said polyol formulation further comprises B5) 0.1-2.0 pbw, based on the total weight of component B, of a polyether polyol started from ethylenediamine, having a weight-average molecular weight of 250-800 g/mol (measured according to ISO 16014-1-2003).

5. A method for preparing a polyurethane resin, which is prepared from the reaction of a reaction system comprising the following components:
Component A, an isocyanate mixture having a functionality of not less than 2;
Component B, said polyol formulation as claimed in any of claims 1-4; and,
Component C, a free-radical initiator.

6. The method as claimed in claim 5, **characterized in that** the content of said component C free-radical initiator is 0.10-7.250 pbw, preferably 0.20-5.15 pbw, more preferably 0.40-3.10 pbw, based on 100 pbw of component A.

7. The method as claimed in claims 5 or 6, **characterized in that** said component C free-radical initiator is preferably added to component A before being mixed with component B.

8. The method as claimed in claims 5 or 6, **characterized in that** said method further comprises the following steps:
Adding component C to component A at normal temperature, pre-stirring, then mixing with component B by stirring, injecting the mixture into a mold, and heating and curing the mixture to obtain said polyurethane resin;
wherein said components A, B and C are in a mass ratio of 35-80:100:0.20-5.15, preferably 40-80:100:0.4-3.10.

9. A polyurethane resin prepared with the method for preparing a polyurethane resin as claimed in any of claims 5-8.

10. The polyurethane resin as claimed in claim 9, **characterized in that** the polyurethane resin has a surface energy of less than 0.075 N/m, preferably less than 0.07 N/m (measured according to ASTM D2578-99A).

11. The polyurethane resin as claimed in claims 9 or 10, **characterized in that** the polyurethane resin has a weight loss rate at the initial stage of being demolded of < 1% (test method: analytical balance weighing method).

12. The polyurethane resin as claimed in claims 9 or 10, **characterized in that** said polyurethane resin has a weight loss rate of <0.2% after being treated at a temperature of 100°C under a vacuum of -0.075Mpa for 1 hour (test method: analytical balance weighing method).

13. A polyurethane composite, comprising the polyurethane resin as claimed in any of claims 9-12.

14. A polyurethane product, comprising the polyurethane resin as claimed in any of claims 9-12.

15. The polyurethane product as claimed in claim 14, **characterized in that** said polyurethane product is selected from instrument shell, outdoor decorative material, automotive exterior trim and turbine fan blade, preferably instrument shell, outdoor decorative material and automotive exterior trim.
